(19)

Europäisches
Patentamt

European
Patent Office

Office européen
des brevets

(11) **EP 3 401 933 A1**

(12) **EUROPEAN PATENT APPLICATION**

published in accordance with Art. 153(4) EPC

(43) Date of publication:
**14.11.2018 Bulletin 2018/46**

(21) Application number: **16883885.2**

(22) Date of filing: **28.12.2016**

(51) Int Cl.:
$H01F\ 1/06^{(2006.01)}$     $B22F\ 1/00^{(2006.01)}$
$B22F\ 3/00^{(2006.01)}$     $B22F\ 9/08^{(2006.01)}$
$C22C\ 12/00^{(2006.01)}$     $H01F\ 1/08^{(2006.01)}$
$H01F\ 41/02^{(2006.01)}$

(86) International application number:
**PCT/JP2016/089058**

(87) International publication number:
**WO 2017/119386 (13.07.2017 Gazette 2017/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **07.01.2016 JP 2016001688**

(71) Applicant: **Toda Kogyo Corp.
Hiroshima-shi, Hiroshima 732-0828 (JP)**

(72) Inventors:
• **KATAYAMA, Nobuhiro**
  Otake-shi
  **Hiroshima 739-0652 (JP)**
• **MORIMOTO, Koichiro**
  Otake-shi
  **Hiroshima 739-0652 (JP)**

(74) Representative: **Viering, Jentschura & Partner
mbB
Patent- und Rechtsanwälte
Am Brauhaus 8
01099 Dresden (DE)**

(54) **Mn-Bi-BASED MAGNETIC POWDER, METHOD FOR PRODUCING SAME, COMPOUND FOR BOND MAGNET, BOND MAGNET, Mn-Bi-BASED METAL MAGNET AND METHOD FOR PRODUCING SAME**

(57) A Mn-Bi-based magnetic powder, which contains a hexagonal Mn-Bi-based magnetic phase containing Sn and has a Sn content of 0.2 to 5 at% with respect to a sum of Mn, Bi and Sn, is provided. In addition, a bond magnet containing a kneaded product of this Mn-Bi-based magnetic powder with a resin binder is provided. Furthermore, a Mn-Bi-based metal magnet, which contains a hexagonal Mn-Bi-based magnetic phase containing Sn and has a Sn content of 0.2 to 5 at% with respect to a sum of Mn, Bi and Sn, is provided.

**Fig.1**

**EP 3 401 933 A1**

## Description

### Technical Field

The present disclosure relates to a Mn-Bi-based magnetic powder, a method for producing the same, a compound for a bond magnet, a bond magnet, a Mn-Bi-based metal magnet and a method for producing the same.

### Background Art

A Mn-Bi-based magnet powder is expected to be industrially utilized as a magnet for various kinds of motors and the like since it has a high saturation magnetization and large magnetocrystalline anisotropy. However, there is a tendency that the Mn-Bi-based magnetic powder exhibits low oxidation resistance and the saturation magnetization thereof decreases due to its rapid oxidative corrosion particularly in a water-containing atmosphere. Hence, methods have been attempted in which the Mn-Bi magnetic powder is covered with a binding resin or a rust-preventive agent is contained in the Mn-Bi magnetic powder in order to cope with such a phenomenon.

As another method, a method in which another metal element is added to the Mn-Bi magnetic powder has been attempted. For example, in Patent Literature 1, it is proposed to electrochemically stabilize the crystal structure by substituting a part of Mn of hexagonal Mn-Bi with Ni and thus to prevent the decomposition in a corrosive environment. In Patent Literature 2, it is proposed to improve corrosion resistance by adding an alkaline earth metal such as Sr to the Mn-Bi alloy magnetic powder.

In Patent Literature 3, it is proposed to prevent oxidative decomposition and suppress a decrease in saturation magnetization by adsorbing a cationic activator or an amphoteric activator containing a nitrogen atom such as an amine, amide, or imide to the Mn-Bi alloy magnetic powder.

### Citation List

### Patent Literature

Patent Literature 1: Japanese Unexamined Patent Publication No. H9-139304

Patent Literature 2: Japanese Unexamined Patent Publication No. 2001-257110

Patent Literature 3: Japanese Unexamined Patent Publication No. H9-7163

### Summary of Invention

### Technical Problem

However, there is a tendency in the conventional technique that the corrosion resistance of a Mn-Bi-based magnetic powder is not sufficient and the saturation magnetization greatly decreases particularly at a high temperature and a high humidity. For this reason, a Mn-Bi-based magnetic material has not yet been put to practical use as a magnet material. Accordingly, an object of the present invention is to provide a Mn-Bi-based magnetic powder, which can maintain a high saturation magnetization even when being stored for a long period of time in a high temperature and high humidity environment, and a method for producing such a Mn-Bi-based magnetic powder in an aspect. In addition, an object of the present invention is to provide a bond magnet, which can maintain a high saturation magnetization even when being stored for a long period of time in a high temperature and high humidity environment, and a compound for bond magnet, from which such a bond magnet can be produced, in another aspect. An object of the present invention is to provide a Mn-Bi-based metal magnet, which can maintain a high saturation magnetization even when being stored for a long period of time in a high temperature and high humidity environment, and a method for producing the same in still another aspect.

### Solution to Problem

The oxidative corrosion rapidly proceeds and this becomes a factor of a decrease in saturation magnetization when the conventional Mn-Bi magnetic powder is stored in a high temperature and high humidity environment. It has been found that this is mainly due to low oxidation resistance of the hexagonal Mn-Bi magnetic phase contained in the Mn-Bi magnetic powder. Hence, the inventors of the present invention have conducted intensive investigations in order to improve the oxidation resistance of the hexagonal Mn-Bi magnetic phase. As a result, it has been found out that it is effective to contain Sn in the hexagonal Mn-Bi magnetic phase in a predetermined content. The present invention has been made on the basis of such findings, and it provides a Mn-Bi-based magnetic powder which has a hexagonal Mn-Bi-based magnetic phase containing Sn and a Sn content of 0.2 to 5 at% with respect to a sum of Mn, Bi and Sn in an aspect.

The above-described Mn-Bi-based magnetic powder contains Sn in a hexagonal Mn-Bi-based magnetic phase exhibiting low oxidation resistance. It is presumed that the oxidation resistance of the hexagonal Mn-Bi-based magnetic phase in a high temperature and high humidity environment is improved by this. A Mn-Bi-based magnetic powder having such a hexagonal Mn-Bi-based magnetic phase can maintain a high saturation magnetization even when being stored for a long period of time in a high temperature and high humidity environment.

It is considered that Zn also contributes to the improvement of oxidation resistance of the hexagonal Mn-Bi-based magnetic phase in the same manner as Sn. However, there is a tendency that Zn volatilizes more than Sn in the process of producing the Mn-Bi-based magnetic powder since Zn has a lower boiling point. Meanwhile, Sn is suitable for production on an industrial scale since Sn hardly volatilizes as compared with Zn. In other words, the Mn-Bi-based magnetic powder is suitable for production on an industrial scale and also can maintain a high saturation magnetization even when being stored for a long period of time in a high temperature and high humidity environment as it contains Sn in a predetermined amount.

In the Mn-Bi-based magnetic powder described above, the hexagonal Mn-Bi-based magnetic phase may contain Zn and a total content of Sn and Zn may be 5 at% or less with respect to a sum of Mn, Bi, Sn and Zn in some embodiments. It is possible to further improve the oxidation resistance in a high temperature and high humidity environment by containing Zn since Zn has a great act of improving oxidation resistance. This makes it possible to sufficiently maintain a high saturation magnetization even when the Mn-Bi-based magnetic powder is stored for a long period of time in a high temperature and high humidity environment.

The present invention provides a method for producing a Mn-Bi-based magnetic powder, which includes a step of generating a hexagonal Mn-Bi-based magnetic phase containing Sn by heating an alloy containing Mn, Bi and Sn and obtaining a Mn-Bi-based magnetic powder having a Sn content of 0.2 to 5 at% with respect to a sum of Mn, Bi and Sn in another aspect. The alloy mentioned here may be a quenched ribbon or an ingot obtained through melting in an arc furnace or may be powdery.

In the method for producing a Mn-Bi-based magnetic powder described above, a hexagonal Mn-Bi-based magnetic phase containing Sn is generated by heating an alloy containing Mn, Bi and Sn. It is presumed that the oxidation resistance of the hexagonal Mn-Bi-based magnetic phase is improved as it contains Sn. Hence, a Mn-Bi-based magnetic powder obtained by the producing method described above can maintain a high saturation magnetization even when being stored for a long period of time in a high temperature and high humidity environment.

In the method for producing a Mn-Bi-based magnetic powder described above, the alloy may be heated in an inert atmosphere in some embodiments. This makes it possible to produce a Mn-Bi-based magnetic powder in which oxidation of the hexagonal Mn-Bi-based magnetic phase is suppressed and the magnetic properties are sufficiently high.

In other some embodiments, the alloy may be an alloy powder and the Mn-Bi-based magnetic powder having a total content of Sn and Zn of 5 at% or less with respect to a sum of Mn, Bi, Sn and Zn may be obtained by mixing the alloy powder with a Zn powder, heating a mixed powder containing the alloy powder and the Zn powder, and generating a hexagonal Mn-Bi-based magnetic phase containing Sn and Zn. The Mn-Bi-based magnetic powder can maintain a higher saturation magnetization even when being stored for a long period of time in a high temperature and high humidity environment as it contains Zn since Zn has a great act of improving oxidation resistance. In addition, it is possible to suppress the volatilization of Zn as compared with the case of blending Zn at the time of preparation of the alloy since an alloy powder containing Mn, Bi and Sn and a Zn powder are mixed together. Hence, the Mn-Bi-based magnetic powder is suitable for production on an industrial scale.

In the method for producing a Mn-Bi-based magnetic powder described above, the mixed powder containing the alloy powder and the Zn powder may be heated in an inert atmosphere in a vacuum or under reduced pressure in some embodiments. This promotes the diffusion of Zn into the hexagonal Mn-Bi-based magnetic phase and makes it possible to obtain a Mn-Bi-based magnetic powder exhibiting superior oxidation resistance.

In some embodiments, the alloy may be an alloy powder obtained by pulverizing a quenched ribbon obtained by quenching a molten material containing Mn, Bi and Sn. This makes it possible to efficiently produce a Mn-Bi-based magnetic powder, which can maintain a high saturation magnetization even when being stored for a long period of time in a high temperature and high humidity environment, on an industrial scale.

The present invention provides a compound for bond magnet containing a kneaded product of the Mn-Bi-based magnetic powder described above with a resin binder and a bond magnet containing the Mn-Bi-based magnetic powder and a resin binder in still another aspect. This bond magnet can be obtained by, for example, molding a compound for bond magnet. Such compound for bond magnet and bond magnet can maintain a high saturation magnetization even when being stored for a long period of time in a high temperature and high humidity environment since these contain the Mn-Bi-based magnetic powder described above. In addition, these can be efficiently produced on an industrial scale.

The present invention provides a method for producing a Mn-Bi-based metal magnet, which includes a step of heating a molded body containing the Mn-Bi-based magnetic powder described above in still another aspect. Such a Mn-Bi-based metal magnet can maintain a high saturation magnetization even when being stored for a long period of time in a high temperature and high humidity environment since it contains the Mn-Bi-based magnetic powder described above.

The present invention provides a Mn-Bi-based metal magnet, which contains a hexagonal Mn-Bi-based magnetic phase containing Sn and has a Sn content of 0.2 to 5 at% with respect to a sum of Mn, Bi and Sn in still another aspect. In this Mn-Bi-based metal magnet, a hexagonal Mn-Bi-based magnetic phase exhibiting low oxidation resistance contains Sn. It is presumed that the oxidation resistance of the hexagonal Mn-Bi-based magnetic phase in a high temperature and high humidity environment is improved by this. As a result, the Mn-Bi-based metal magnet can maintain a high saturation magnetization even when being stored for a long period of time in a high temperature and high humidity environment.

In the Mn-Bi-based metal magnet described above, the hexagonal Mn-Bi-based magnetic phase may contain Zn and the total content of Sn and Zn may be 5 at% or less with respect to the sum of Mn, Bi, Sn and Zn in some embodiments. The oxidation resistance of the hexagonal Mn-Bi-based magnetic phase in a high temperature and high humidity environment can be further improved as the hexagonal Mn-Bi-based magnetic phase contains Zn since Zn has a great act of improving oxidation resistance. The Mn-Bi-based metal magnet can sufficiently maintain a high saturation magnetization even when being stored for a long period of time in a high temperature and high humidity environment by this.

**Advantageous Effects of Invention**

The present invention can provide a Mn-Bi-based magnetic powder, which can maintain a high saturation magnetization even when being stored for a long period of time in a high temperature and high humidity environment, and a method for producing such a Mn-Bi-based magnetic powder in an aspect. The present invention can provide a bond magnet, which can maintain a high saturation magnetization even when being stored for a long period of time in a high temperature and high humidity environment, and a compound for bond magnet, from which such a bond magnet can be produced, in another aspect. The present invention can provide a Mn-Bi-based metal magnet, which can maintain a high saturation magnetization even when being stored for a long period of time in a high temperature and high humidity environment, and a method for producing the same in still another aspect.

**Brief Description of Drawings**

FIG. 1(A) is an example of an electron micrograph illustrating a part of a cross section of a Mn-Bi-based magnetic powder. FIG. 1(B) is a view illustrating the results on the linear analysis of the cross section in FIG. 1(A).
FIG. 2 is an enlarged view illustrating the analysis results of Sn in FIG. 1(B).
FIG. 3 is a flowchart illustrating an example of a method for producing a Mn-Bi-based magnetic powder, a bond magnet, and a Mn-Bi-based metal magnet.
FIG. 4 is a flowchart illustrating another example of a method for producing a Mn-Bi-based magnetic powder, a bond magnet, and a Mn-Bi-based metal magnet.
FIG. 5 is a flowchart illustrating still another example of a method for producing a Mn-Bi-based magnetic powder, a bond magnet, and a Mn-Bi-based metal magnet.
FIG. 6 is a perspective view illustrating an embodiment of a Mn-Bi-based metal magnet.
FIG. 7(A) is an example of an electron micrograph illustrating a part of a cross section of a Mn-Bi-based magnetic powder containing a hexagonal Mn-Bi-based magnetic phase containing Zn. FIG. 7(B) is a view illustrating the results on the linear analysis of the cross section in FIG. 7(A).

**Description of Embodiments**

An embodiment of the present invention will be described in detail with reference to the drawings according to circumstances. It should be noted that the following embodiments are examples for describing the present invention and are not intended to limit the present invention to the following contents.

The Mn-Bi-based magnetic powder of the present embodiment contains a hexagonal Mn-Bi-based magnetic phase as a main component. The Mn-Bi-based magnetic powder may include at least either of a Bi phase or a Mn phase as an auxiliary component in addition to the hexagonal Mn-Bi-based magnetic phase. The Mn phase is composed of, for example, Mn simple substance or Mn oxide. The Bi phase is composed of, for example, Bi simple substance.

The hexagonal Mn-Bi-based magnetic phase contains Sn. The content of Sn in the Mn-Bi-based magnetic powder is 0.2 to 5 at% with respect to the sum of Mn, Bi and Sn. It is possible to increase the oxidation resistance of the Mn-Bi-based magnetic powder while maintaining the magnetic properties thereof high by setting the content of Sn to this range. The lower limit of the Sn content is preferably 0.3 at% and more preferably 0.5 at% from the viewpoint of further increasing the oxidation resistance. The upper limit of the Sn content is preferably 3 at% and more preferably 2 at% from the viewpoint of further increasing the magnetic properties.

The content of Mn in the Mn-Bi-based magnetic powder is, for example, 35 to 65 at% with respect to the sum of Mn, Bi and Sn. The content of Mn may be 40 to 60 at% or 45 to 55 at% with respect to the sum of Mn, Bi and Sn from the viewpoint of increasing the proportion of the hexagonal Mn-Bi-based magnetic phase and thus further increasing the magnetic properties. It is preferable that the content of Bi in the Mn-Bi-based magnetic powder is lower than the content of Mn on the basis of atomic percentage. This is because Sn tends to substitute Bi of the hexagonal Mn-Bi-based magnetic phase. In other words, it is possible to increase the proportion of the hexagonal Mn-Bi-based magnetic phase contained in the Mn-Bi-based magnetic powder by setting the content of Bi to be lower than the content of Mn on the basis of atomic percentage.

The content of Bi in the Mn-Bi-based magnetic powder is, for example, 33 to 63 at% with respect to the sum of Mn, Bi and Sn. The content of Bi may be 38 to 58 at% or 43 to 53 at% with respect to the sum of Mn, Bi and Sn from the viewpoint of increasing the proportion of the hexagonal Mn-Bi-based magnetic phase and thus further increasing the magnetic properties.

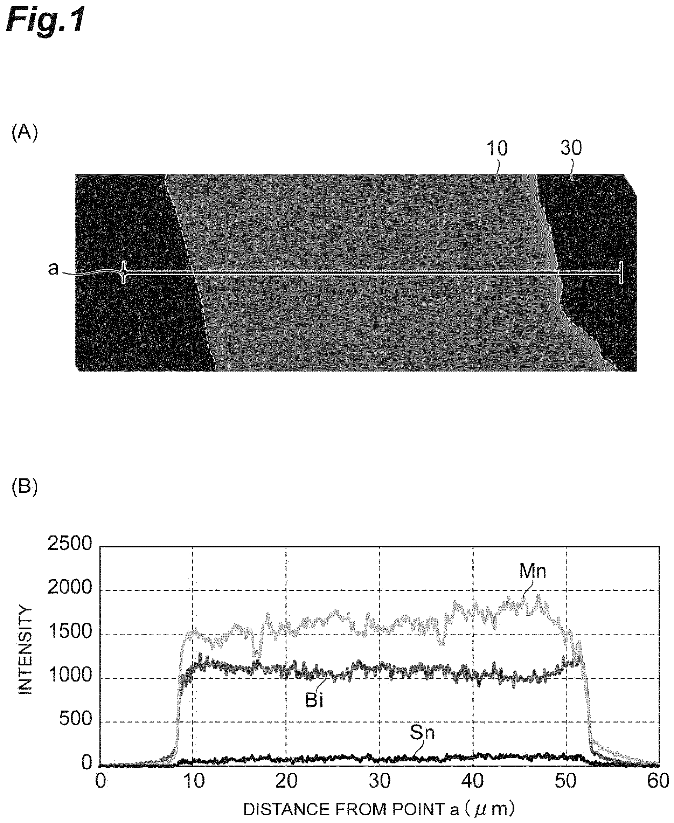

FIG. 1(A) is an example of an electron micrograph illustrating an enlarged part of a cross section obtained by embedding the Mn-Bi-based magnetic powder in a resin and polishing this using a cross-section polisher. The broken line in the electron micrograph of FIG. 1(A) is drawn in order to clarify the boundary. FIG. 1(B) is a view illustrating the results on the linear analysis (EDX analysis) performed along the line segment by taking point a in the electron micrograph of FIG. 1(A) as a starting point.

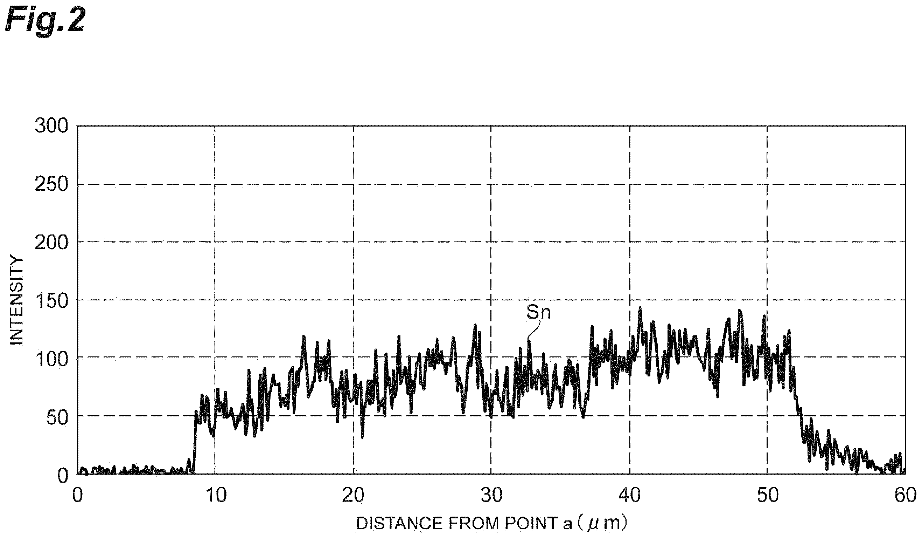

FIG. 1(A) illustrates a hexagonal Mn-Bi-based magnetic phase 10 contained in the Mn-Bi-based magnetic powder. In FIG. 1(A), a pair of resin portions 30 are illustrated so as to sandwich the Mn-Bi-based magnetic powder 10. FIG. 2 is an enlarged view illustrating the analysis results of Sn in FIG. 1(B). According to the linear analysis illustrated in FIG. 1(B) and FIG. 2, the hexagonal Mn-Bi-based magnetic phase 10 contains Mn and Bi as main components and Sn as a trace component. It is presumed that Sn substitutes Bi in the crystal structure of the hexagonal Mn-Bi-based magnetic phase 10.

In the Mn-Bi-based magnetic powder, the oxidation resistance of the hexagonal Mn-Bi-based magnetic phase 10 can be effectively improved as the hexagonal Mn-Bi-based magnetic phase 10 contains Sn. Incidentally, Sn may be contained in phases other than the hexagonal Mn-Bi-based magnetic phase 10. A hexagonal Mn-Bi-based magnetic phase containing Mn-Bi as a main component and Sn or Zn together with Sn as an auxiliary component is referred to as a hexagonal Mn-Bi-based magnetic phase in the present specification. In the same manner, a Mn-Bi-based magnetic powder containing Mn-Bi as a main component and Sn or Zn together with Sn as an auxiliary component is referred to as a Mn-Bi-based magnetic powder in the present specification.

In some embodiments, the Mn-Bi-based magnetic powder may contain Zn in the hexagonal Mn-Bi-based magnetic phase in addition to Sn. The oxidation resistance of the Mn-Bi-based magnetic powder is further improved as the Mn-Bi-based magnetic powder contains Zn. It is presumed that this is because the oxidation resistance of the hexagonal Mn-Bi-based magnetic phase is improved as the hexagonal Mn-Bi-based magnetic phase contains Zn. The total content of Zn and Sn in the Mn-Bi-based magnetic powder is 0.2 to 5 at% with respect to the sum of Mn, Bi, Sn and Zn from the viewpoint of increasing the magnetic properties while sufficiently increasing the oxidation resistance in a high temperature and high humidity environment. The lower limit of the total content of Zn and Sn is preferably 0.3 at% and more preferably 0.5 at% from the viewpoint of further increasing the oxidation resistance of the Mn-Bi-based magnetic powder. The upper limit of the total content of Zn and Sn is preferably 3 at% and more preferably 2 at% from the viewpoint of further increasing the magnetic properties.

Zn has a lower boiling point than Sn, and there is thus a case in which Zn volatilizes in the producing process when a raw material containing Zn is used. Hence, the atomic ratio of Zn to Sn may be, for example, 3 or less or 2 or less from the viewpoint of increasing the suitability for the producing process on an industrial scale. On the other hand, the atomic ratio of Zn to Sn may be 0.5 or more or 0.8 or more from the viewpoint of sufficiently increasing the oxidation resistance at a high temperature and a high humidity.

The Mn-Bi-based magnetic powder may be a magnet powder subjected to a heat treatment in a magnetic field. In the Mn-Bi-based magnetic powder of the present embodiment, the hexagonal Mn-Bi-based magnetic phase exhibits high oxidation resistance. For this reason, a decrease in the saturation magnetization can be diminished even when the Mn-Bi-based magnetic powder is stored for a long period of time in a high temperature and high humidity environment. A decrease in the saturation magnetization can be diminished even when a bond magnet and a Mn-Bi-based metal magnet which are formed using such a Mn-Bi-based magnetic powder are stored for a long period of time in a high temperature and high humidity environment.

Next, several embodiments of a method for producing a Mn-Bi-based magnetic powder will be described below.

A method for producing a Mn-Bi-based magnetic powder according to an embodiment includes a step of obtaining a Mn-Bi-based alloy powder containing Mn, Bi and Sn and a step of generating a hexagonal Mn-Bi-based magnetic phase by heating the Mn-Bi-based alloy powder and obtaining a Mn-Bi-based magnetic powder containing a hexagonal Mn-Bi-based magnetic phase containing Sn. The content of Sn in this Mn-Bi-based magnetic powder is 0.2 to 5 at% with respect to the sum of Mn, Bi and Sn.

Examples of the step of obtaining a Mn-Bi-based alloy powder may include the following methods (i) to (iv).

(i) A powder metallurgy method in which Mn, Bi and Sn are pulverized, sintered, and then pulverized to obtain a Mn-Bi-based alloy powder

(ii) An atomizing method in which a Mn-Bi-based alloy (Mn-Bi-Sn alloy) is melted and atomized to obtain a Mn-Bi-based alloy powder

(iii) A melting method in which a lump of a Mn-Bi-based alloy (Mn-Bi-Sn alloy) obtained through melting in an arc furnace is pulverized to obtain a Mn-Bi-based alloy powder

(iv) A liquid quenching method in which a melted Mn-Bi-based alloy (Mn-Bi-Sn alloy) is quenched by using a roll and the quenched ribbon thus obtained is pulverized to obtain a Mn-Bi-based alloy powder

In each of the above methods, a chip, a shot, a powder, and the like can be appropriately selected and used as raw materials of Mn-Bi and Sn.

Among the above methods (i) to (iv), (iv) the liquid quenching method is preferable. In (iv) the liquid quenching method, a Mn-Bi-based magnetic powder having a sufficiently small particle diameter can be obtained by pulverizing a quenched ribbon obtained by quenching a molten alloy by using a roll. This makes it possible to further increase the saturation magnetization.

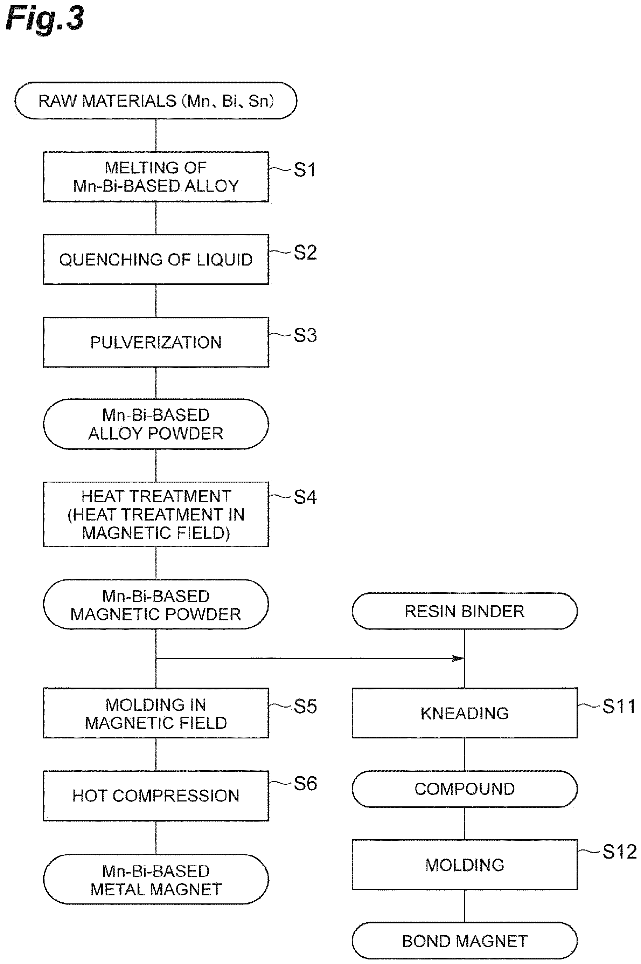

FIG. 3 is a flowchart illustrating an example of the method for producing a Mn-Bi-based magnetic powder, a compound for bond magnet, a bond magnet, and a Mn-Bi-based metal magnet according to the present embodiment. In this example, a Mn-Bi-based alloy powder is prepared by (iv) the liquid quenching method described above. In other words, raw materials of Mn, Bi and Sn are first prepared, and a melting step S1 of melting (melting and casting) the Mn-Bi-based alloy by, for example, arc melting is performed. Thereafter, a liquid quenching step S2 of obtaining a quenched ribbon by a liquid quenching method is performed. Subsequently, a pulverization step S3 of pulverizing the quenched ribbon thus obtained is performed to obtain a Mn-Bi-based alloy powder.

Coarse pulverization may be performed in the pulverization step S3 and fine pulverization may be performed after a heat treatment step S4 to be described later, or coarse pulverization and fine pulverization may be performed in the pulverization step S3. In the case of performing fine pulverization as well, it is preferable to pulverize the quenched ribbon to have an average particle diameter of about 10 $\mu$m at which the average particle diameter becomes a single domain level. An anisotropic Mn-Bi-based magnet powder can be obtained without applying a magnetic field in the heat treatment step S4 as the quenched ribbon is pulverized to this degree.

In the heat treatment step S4, the Mn-Bi-based alloy powder is heated at 250°C to 380°C for 30 to 200 minutes in an inert atmosphere to obtain a Mn-Bi-based magnetic powder. Examples of the inert gas may include argon gas and nitrogen gas. A hexagonal Mn-Bi-based magnetic phase containing Sn is generated by performing a heat treatment under such heating conditions.

When the heating temperature in the heating conditions described above is lower than 250°C, there is a tendency that the hexagonal Mn-Bi-based magnetic phase is not sufficiently generated or the generation rate slows down and the heat treatment step S4 is prolonged. On the other hand, when the heating temperature is higher than 380°C, there is a tendency that a structural phase transition from a ferromagnetic low temperature phase of the hexagonal Mn-Bi-based magnetic phase to a paramagnetic high temperature phase occurs and the ferromagnetism disappears. In addition, Bi dissolves and the Bi phase precipitates and there is thus a tendency that the proportion in the hexagonal Mn-Bi-based magnetic phase decreases and the saturation magnetization value decreases. When the treatment time of the heating conditions is too short, there is a tendency that the hexagonal Mn-Bi-based magnetic phase is not sufficiently generated and the value of the saturation magnetization decreases. On the other hand, when the treatment time is too long, there is a tendency that the hexagonal Mn-Bi-based magnetic phase grows and the coercive force decreases.

The Mn-Bi-based magnetic powder obtained by the producing method described above contains a hexagonal Mn-Bi-based magnetic phase exhibiting high oxidation resistance. For this reason, a decrease in the saturation magnetization can be diminished even when the Mn-Bi-based magnetic powder is stored for a long period of time in a high temperature and high humidity environment.

The composition of the Mn-Bi-based magnetic powder, namely, the molar ratio of Mn, Bi and Sn is substantially equal to the blending ratio of the respective raw materials of Mn, Bi and Sn to be used in the melting step S1. This is because the scattering of raw materials can be sufficiently suppressed in the producing process. Hence, the producing method described above is suitable for industrial production as the composition of the Mn-Bi-based magnetic powder can be easily adjusted in the method.

In the example of FIG. 3, a molding step in a magnetic field S5 of molding the Mn-Bi-based magnetic powder in a magnetic field to fabricate a molded body is performed. The magnetic field to be applied is, for example, 4000 to 15000 G, and the molding pressure is, for example, 1 to 10 t/cm$^2$. Subsequently, a hot compression step S6 of applying a pressure to the molded body thus obtained while heating the molded body at a temperature of 280°C to 380°C in an inert atmosphere.

Through the above steps, it is possible to obtain a Mn-Bi-based metal magnet, which can maintain a high saturation magnetization even when being used in a high temperature and high humidity environment.

In another example, in the heat treatment step S4, the heat treatment may be performed while applying a magnetic field of, for example, 4000 to 8000 G to the Mn-Bi-based magnetic powder. It is possible to obtain an anisotropic Mn-Bi-based magnet powder through such a heat treatment step in a magnetic field.

When the heating temperature in the heat treatment step in a magnetic field is too low, there is a tendency that the hexagonal Mn-Bi-based magnetic phase is not sufficiently generated or the hexagonal Mn-Bi-based magnetic phase generated cannot become sufficiently anisotropic. On the other hand, when the heating temperature is too high, there is a tendency that a structural phase transition from a ferromagnetic low temperature phase of the hexagonal Mn-Bi-based magnetic phase to a paramagnetic high temperature phase occurs and the ferromagnetism disappears. When the heating time in the heat treatment step in a magnetic field is too short, there is a tendency that the hexagonal Mn-Bi-based magnetic phase is not sufficiently generated or the hexagonal Mn-Bi-based magnetic phase generated cannot become sufficiently anisotropic.

Another pulverization step may be performed after the heat treatment step S4 (which may be a heat treatment step in a magnetic field) to obtain an anisotropic Mn-Bi-based magnet powder having a desired particle diameter. The Mn-Bi-based magnet powder, which is one form of the Mn-Bi-based magnetic powder, has the same composition as that of the Mn-Bi-based magnetic powder described above.

A compound for bond magnet and a bond magnet may be fabricated using the Mn-Bi-based magnetic powder. In this case, a kneading step S11 is performed in which a resin binder containing a thermoplastic resin, a coupling material, and a lubricant is added to the Mn-Bi-based magnetic powder and the mixture is kneaded. A molding step S12 is performed in which a compound for bond magnet containing the kneaded product obtained by kneading is molded in a magnetic field of, for example, 4000 to 8000 G, whereby a bond magnet can be produced. The molding can be performed by a known method such as compression molding and injection molding at a molding pressure of 1 to 10 t/cm$^2$.

The resin binder may be a thermosetting resin such as an epoxy resin. In this case, it is possible to produce a bond magnet by kneading the Mn-Bi-based magnetic powder with a resin binder, molding the kneaded product by pressure molding or the like, and then performing a heat treatment of the molded body. It is possible to suppress a decrease in the saturation magnetization even when the bond magnet obtained by using the Mn-Bi-based magnetic powder is used in a high temperature and high humidity environment. In some other embodiments, a compound for bond magnet and a bond magnet may be fabricated using the Mn-Bi-based magnet powder as a Mn-Bi-based magnetic powder.

Next, another embodiment of the method for producing a Mn-Bi-based magnetic powder will be described. The method for producing a Mn-Bi-based magnetic powder according to the present embodiment includes a step of obtaining a Mn-Bi-based alloy containing Mn, Bi and Sn, a step of generating a hexagonal Mn-Bi-based magnetic phase containing Sn by heating the Mn-Bi-based alloy, and a step of obtaining a Mn-Bi-based magnetic powder by pulverizing the Mn-Bi-based alloy containing a hexagonal Mn-Bi-based magnetic phase containing Sn. In the Mn-Bi-based alloy, the content of Sn in this Mn-Bi-based magnetic powder is 0.2 to 5 at% with respect to the sum of Mn, Bi and Sn.

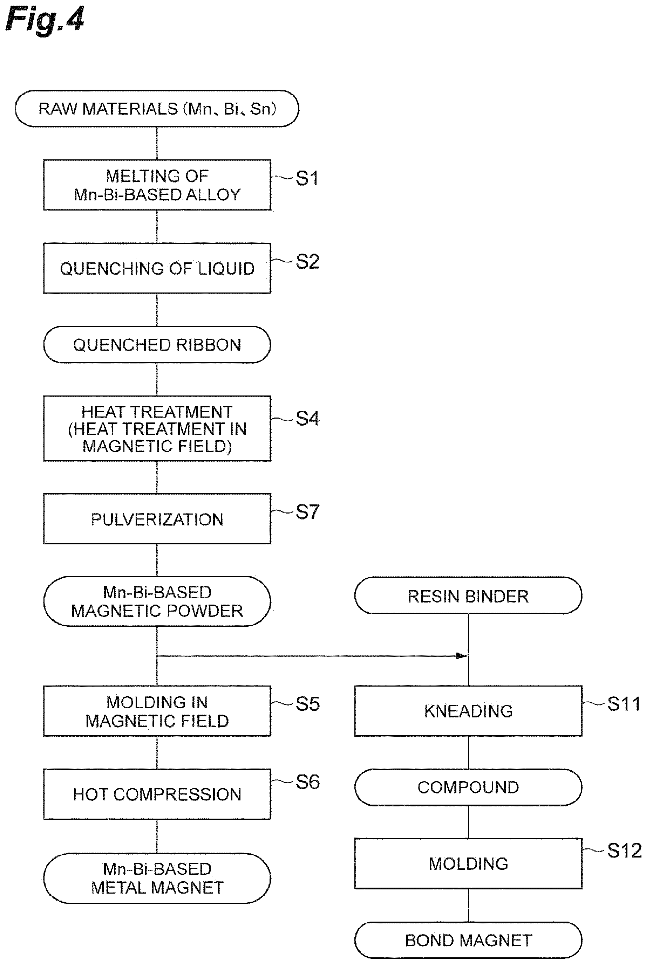

FIG. 4 is a flowchart illustrating an example of the method for producing a Mn-Bi-based magnetic powder, a compound for bond magnet, a bond magnet, and a Mn-Bi-based metal magnet according to the present embodiment. In this example, the melting step S1 and the liquid quenching step S2 are performed in the same manner as in the example of FIG. 3. The Mn-Bi-based alloy (quenched ribbon) obtained in the liquid quenching step S2 is subjected to a heat treatment. The conditions of the heat treatment here are the same as those of the heat treatment step S4 in FIG. 3. It is possible to sufficiently diminish deviation in the composition from the blending ratio of raw materials since the heat treatment is performed before pulverization in this manner.

In the pulverization step S7, coarse pulverization and fine pulverization are performed to pulverize the quenched ribbon until to have an average particle diameter of about 10 μm at which the average particle diameter becomes a single domain level. A Mn-Bi-based magnetic powder can be obtained in this manner. Incidentally, the heat treatment step S4 may be a heat treatment step in a magnetic field in which the Mn-Bi-based alloy is heated while applying a magnetic field of 4000 to 8000 G to the Mn-Bi-based alloy. In this case, an anisotropic ribbon is obtained. Coarse pulverization is performed in the pulverization step S7 after this anisotropic ribbon has been obtained, whereby an anisotropic Mn-Bi-based magnet powder can be obtained. In this case, fine pulverization may not be performed. The molding step in a magnetic field S5, the hot compression step S6, the kneading step S11 and the molding step S12 are performed in the same manner as in the example of FIG. 3. This makes it possible to obtain a Mn-Bi-based metal magnet, a compound for bond magnet and a bond magnet.

Next, still another embodiment of the method for producing a Mn-Bi-based magnetic powder will be described. The method for producing a Mn-Bi-based magnetic powder of the present embodiment includes a step of obtaining a Mn-Bi-based alloy powder, a step of mixing the Mn-Bi-based alloy powder with a Zn powder and obtaining a mixed powder, and a step of generating a hexagonal Mn-Bi-based magnetic phase containing Sn and Zn by heating the mixed powder under reduced pressure and obtaining a Mn-Bi-based magnetic powder containing a hexagonal Mn-Bi-based magnetic phase. In this Mn-Bi-based magnetic powder, the total content of Sn and Zn is 0.2 to 5 at% with respect to the sum of Mn, Bi, Sn and Zn.

The step of obtaining a Mn-Bi-based alloy powder in the producing method of the present embodiment can be performed in the same manner as in the above embodiments. In the producing method of the present embodiment, volatilization of Zn can be sufficiently suppressed since a Zn powder is mixed after the Mn-Bi-based alloy powder has been obtained. The Zn powder is blended so that the total ratio of Sn and Zn to the sum of Mn, Bi, Sn and Zn is, for example, 0.5 to 6 mol% with respect to the Mn-Bi-based alloy powder.

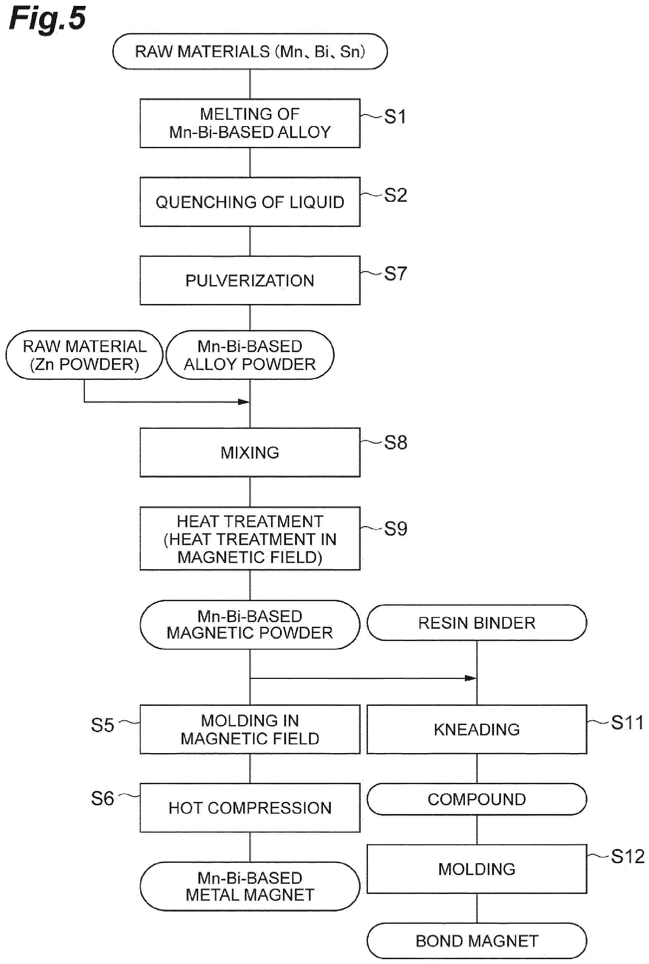

FIG. 5 is a flowchart illustrating an example of the method for producing a Mn-Bi-based magnetic powder, a compound for bond magnet, a bond magnet, and a Mn-Bi-based metal magnet according to the present embodiment. In this example, a Mn-Bi-based alloy powder is obtained by performing the same melting step S1, liquid quenching step S2, and pulverization step S3 as those in the producing method illustrated in the flowchart of FIG. 3. The producing method of this example is different from the producing method illustrated in the flowchart of FIG. 3 in that a Zn powder is blended into the Mn-Bi-based alloy powder and the mixing step S8 is performed.

It is possible to decrease the amount of Zn scattered as compared with a case in which Zn is blended at the time at which the Mn-Bi-based alloy is melted by preparing a Mn-Bi-based alloy powder and then blending a Zn powder into the Mn-Bi-based alloy powder as in this example. In the heat treatment step S9 of this example, the mixed powder containing the Mn-Bi-based alloy powder and the Zn powder is heated at 250°C to 380°C for 30 to 200 minutes in an inert atmosphere in a vacuum or under reduced pressure (preferably 10 Pa or lower). Zn is efficiently evaporated and smoothly deposited on the surface of the Mn-Bi-based alloy powder by heating the mixed powder in an inert atmosphere in a vacuum or under reduced pressure in this manner. In the heat treatment step S9, Zn deposited on the surface of the Mn-Bi-based alloy powder can be diffused to the interior of the hexagonal Mn-Bi-based magnetic phase 10.

In such a heat treatment step S9, a part of the evaporated Zn scatters in some cases. For this reason, it is preferable to blend the Zn powder in a more amount than the intended Zn content in the Mn-Bi-based magnetic powder. After the heat treatment step S9, the quenched ribbon is pulverized to have an average particle diameter of about 10 $\mu$m at which the average particle diameter becomes a single domain level, whereby a Mn-Bi-based magnetic powder can be obtained. The heat treatment step S9 may be a heat treatment step in a magnetic field in which the mixed powder is heated while applying a magnetic field of, for example, 4000 to 8000 G to the mixed powder. In this case, a Mn-Bi-based magnetic powder can be obtained without performing pulverization.

The Mn-Bi-based magnetic powder obtained by such a producing method has a hexagonal Mn-Bi-based magnetic phase containing Sn and Zn. For this reason, it is possible to diminish a decrease in the saturation magnetization even when the Mn-Bi-based magnetic powder is stored for a long period of time in a high temperature and high humidity environment. A Mn-Bi-based metal magnet can be obtained by performing the molding step in a magnetic field S5 and the hot compression step S6 using such a Mn-Bi-based magnetic powder. In the same manner, a compound for bond magnet can be produced by performing the kneading step S11 and a bond magnet can be produced by further performing the molding step S12. The conditions of each step are the same as those in the producing example illustrated in the flowchart of FIG. 3.

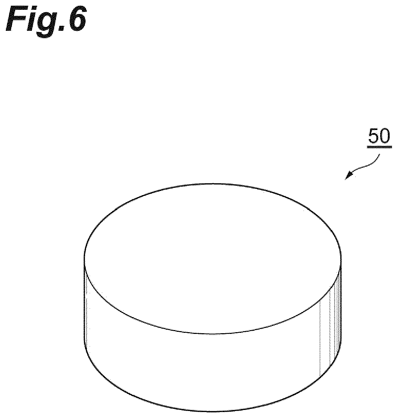

FIG. 6 is a perspective view of a Mn-Bi-based metal magnet 50. In an embodiment, as the composition of the Mn-Bi-based metal magnet 50, a hexagonal Mn-Bi-based magnetic phase containing Sn is contained and the content of Sn is 0.2 to 5 at% with respect to the sum of Mn, Bi and Sn. The contents of Mn, Bi and Sn may be the same as those described for the Mn-Bi-based magnetic powder.

In another embodiment, as the composition of the Mn-Bi-based metal magnet 50, a hexagonal Mn-Bi-based magnetic phase containing Sn and Zn is contained and the total content of Sn and Zn is 0.2 to 5 at% with respect to the sum of Mn, Bi, Sn and Zn. In this case as well, the contents of Mn, Bi, Sn and Zn may be the same as those described for the Mn-Bi-based magnetic powder.

The shape of the Mn-Bi-based metal magnet is not limited to a cylindrical shape as illustrated in FIG. 6, and it may be, for example, a prismatic shape or a spherical shape. The bond magnet may also have a cylindrical shape as illustrated in FIG. 6, or it may have a prismatic shape or a spherical shape.

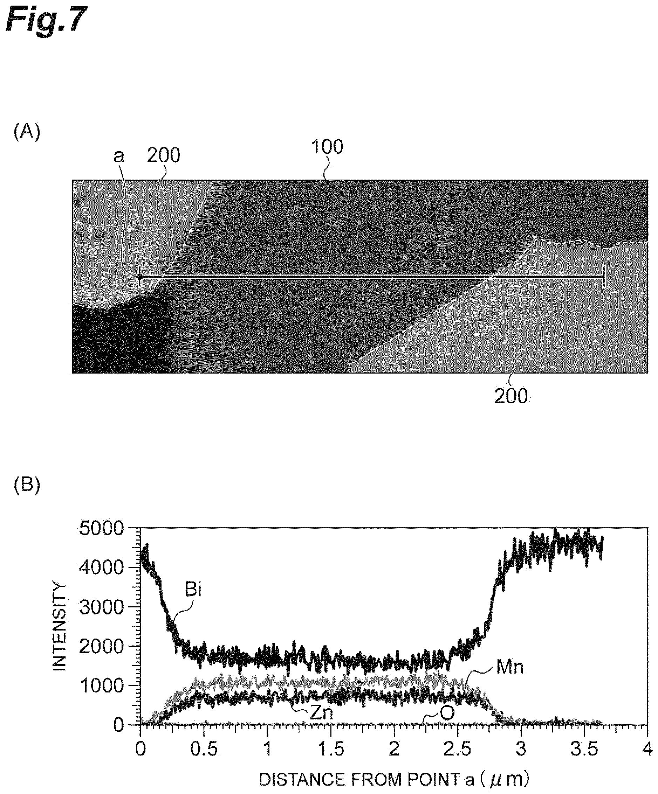

A Mn-Bi-based magnetic powder containing Zn will be described. FIG. 7(A) is an example of an electron micrograph illustrating an enlarged part of a cross section obtained by embedding a Mn-Bi-based magnetic powder containing Zn in a resin and polishing this using a cross-section polisher. The broken line in the electron micrograph of FIG. 7(A) is drawn in order to clarify the boundary. FIG. 7(B) is a view illustrating the results on the linear analysis (EDX analysis) performed along the line segment by taking point a in the electron micrograph of FIG. 7(A) as a starting point.

As illustrated in FIG. 7(A), the Mn-Bi-based magnetic powder has a Mn-Bi-based magnetic phase 100 and a Bi phase 200 so as to sandwich this hexagonal Mn-Bi-based magnetic phase 100. As illustrated in the linear analysis results of FIG. 7(B), the hexagonal Mn-Bi-based magnetic phase 100 contains Mn, Bi and Zn. On the other hand, the Bi phase 200 does not substantially contain Mn and Zn. By the heat treatment step S9 in FIG. 5 described above, Zn diffuses into the hexagonal Mn-Bi-based magnetic phase 100 and is unevenly distributed in the hexagonal Mn-Bi-based magnetic phase 100.

The oxidation resistance of the hexagonal Mn-Bi-based magnetic phase 100 is improved as it contains Zn. However, Zn may be contained in phases other than the hexagonal Mn-Bi-based magnetic phase 100 of the Mn-Bi-based magnetic powder.

Several embodiments of the present invention have been described above, but the present invention is not limited to the above embodiments. For example, an arbitrary element may be contained in addition to the elements described above. The methods for producing a Mn-Bi-based magnetic powder, a compound for bond magnet containing the Mn-Bi-based magnetic powder, and a bond magnet, and a Mn-Bi-based metal magnet are not limited to the embodiments described above, and these may be produced by other producing methods. For example, the Mn-Bi-based magnetic powder and the like may be produced by blending Zn at the stage of the melting step S1 in addition to Mn, Bi and Sn as raw materials. In addition, the heat treatment step S4 may be performed before the pulverization step S3 in FIG. 3, for example. In this case, the Mn-Bi-based magnetic powder can be obtained through the pulverization step S3.

## EXAMPLES

Hereinafter, the contents of the present invention will be described in more detail with reference to Examples and Comparative Examples. However, the present invention is not limited to the following Examples.

(Example 1)

<Fabrication of Mn-Bi-based Magnetic Powder>

A Mn-Bi-based alloy was prepared by melting Mn chips, Bi shots and Sn shots in an arc melting furnace. As presented in Table 4, the blending amounts of Mn, Bi and Sn were set to 9.56 g for Mn, 34.2 g for Bi and 1.24 g for Sn. The Mn-Bi-based alloy obtained in the arc melting furnace was placed in a tapping nozzle of a transparent quartz tube having an orifice diameter of 0.45 mm $\phi$ at the bottom. After the interior of the chamber of the liquid quenching apparatus was evacuated, the Mn-Bi-based alloy in the tapping nozzle was melted by high-frequency melting in an argon gas atmosphere at 50 kPa. Thereafter, a Mn-Bi-based melt was injected onto a copper roll at a melt injection pressure of 10 kPa and a quenched ribbon was obtained. The rotational speed of the roll was set to 20 m/s and the distance between the roll and the tapping nozzle was set to 0.4 mm.

The quenched ribbon thus obtained was subjected to a heat treatment under the following conditions.

<Heat Treatment Conditions>

Atmosphere: nitrogen gas
Temperature: 300°C
Time: 120 minutes

The quenched ribbon was subjected to a heat treatment under the heat treatment conditions described above and then pulverized, thereby obtaining a Mn-Bi-based magnetic powder (Mn-Bi magnet powder) having an average particle diameter of 10 $\mu$m. The content of each element in this Mn-Bi-based magnetic powder was measured according to the following procedure.

The content of each of Mn, Bi, Sn and Zn with respect to the sum of Mn, Bi, Sn and Zn in the Mn-Bi-based magnetic powder was measured by using an ICP emission spectrophotometer (apparatus name: iCAP 6000 manufactured by Thermo Fisher Scientific Inc.). The measurement results are as presented in Table 1.

The saturation magnetization ($4\pi I_{max}$), residual magnetic flux density (Br), and coercive force (Hcj) of the Mn-Bi-based magnetic powder were measured by using a vibrating sample type magnetometer (VSM: VSM-5 Model manufactured by Toei Industry Co., Ltd.). The measurement results are as presented in the column for "Before storage" in Table 2.

The Mn-Bi-based magnetic powder fabricated was stored in the air for 1 hour under the respective temperature conditions of 100°C, 150°C and 200°C, and the magnetic properties thereof after storage were measured. The measurement results are as presented in Table 2. The relative humidity of air in the respective storage conditions was 50%. The decreasing rate of saturation magnetization after storage under each condition was calculated by the following formula (1) by taking the residual magnetic flux density before storage as the reference. The calculation results are as presented in Table 2.

$$\text{Decreasing rate of saturation magnetization (\%)} = 100 - [\text{saturation magnetization after storage at predetermined temperature}]/[\text{saturation magnetization before storage}] \times 100 \qquad (1)$$

(Examples 2 to 4)

Mn-Bi-based magnetic powders were prepared in the same manner as in Example 1 except that the blending amounts of Mn chips, Bi shots and Sn shots were changed as presented in Table 4. Thereafter, the measurement and evaluation were performed in the same manner as in Example 1. The results are as presented in Tables 1 and 2.

(Example 5)

A quenched ribbon was obtained in the same manner as in Example 1 except that the blending amounts of Mn chips, Bi shots and Sn shots were changed as presented in Table 4. The quenched ribbon thus obtained was pulverized, thereby preparing a Mn-Bi-based alloy powder having a particle diameter of 150 $\mu$m or less. A mixed powder was obtained by blending and mixing 0.28 g of Zn powder with the Mn-Bi-based alloy powder thus obtained. The mixed powder thus obtained was subjected to a heat treatment under the following conditions to diffuse Zn, thereby obtaining a Mn-Bi-based magnetic powder containing a hexagonal Mn-Bi-based magnetic phase containing Sn and Zn.

<Heat Treatment Conditions>

Atmosphere: nitrogen gas
Temperature: 300°C
Time: 120 minutes
The mixed powder was subjected to a heat treatment under the heat treatment conditions described above and then pulverized, thereby obtaining a Mn-Bi-based magnetic powder having an average particle diameter of 10 $\mu$m. The content of each element in this Mn-Bi-based magnetic powder was measured in the same manner as in Example 1. In addition, the magnetic properties of the Mn-Bi-based magnetic powder were evaluated in the same manner as in Example 1. The results are as presented in Tables 1 and 2.

(Example 6)

A Mn-Bi-based magnetic powder was prepared in the same manner as in Example 5 except that the blending amounts of Mn chips, Bi shots and Sn shots were changed as presented in Table 2 and the blending amount of Zn powder was changed as presented in Table 4. Thereafter, the measurement and evaluation were performed in the same manner as in Example 1. The results are as presented in Tables 1 and 2.

(Comparative Example 1)

A Mn-Bi-based magnetic powder was prepared in the same manner as in Example 1 except that Sn shots were not added and the blending amounts of Mn chips and Bi shots were changed as presented in Table 4. Thereafter, the measurement and evaluation were performed in the same manner as in Example 1. The results are as presented in Tables 1 and 3.

(Comparative Examples 2 and 3)

Mn-Bi-based magnetic powders were prepared in the same manner as in Example 1 except that the blending amounts of Mn chips, Bi shots and Sn shots were changed as presented in Table 4. Thereafter, the measurement and evaluation were performed in the same manner as in Example 1. The results are as presented in Tables 1 and 3.

(Comparative Example 4)

A Mn-Bi-based magnetic powder was prepared in the same manner as in Example 1 except that the Sn shots were not used and the blending amounts of Mn chips and Bi shots were changed as presented in Table 4, and the blending amount of Zn powder was changed as presented in Table 4. Thereafter, the measurement and evaluation were performed in the same manner as in Example 1. The results are as presented in Tables 1 and 3.

(Comparative Example 5)

A Mn-Bi-based magnetic powder was prepared in the same manner as in Example 1 except that Fe shots were used instead of Sn shots and the blending amounts of Mn chips, Bi shots and Fe shots were changed as presented in Table 4. Thereafter, the measurement and evaluation were performed in the same manner as in Example 1. The results are as presented in Tables 1 and 3.

[Table 1]

|  | Composition (at%) | | | | |
|---|---|---|---|---|---|
|  | Mn | Bi | Sn | Zn | Fe |
| Example 1 | 50.0 | 47.0 | 3.0 | 0.0 | 0.0 |
| Example 2 | 50.0 | 49.0 | 1.0 | 0.0 | 0.0 |
| Example 3 | 50.0 | 49.5 | 0.5 | 0.0 | 0.0 |
| Example 4 | 50.0 | 49.7 | 0.3 | 0.0 | 0.0 |
| Example 5 | 49.5 | 49.5 | 0.5 | 0.5 | 0.0 |
| Example 6 | 49.0 | 49.5 | 0.5 | 1.0 | 0.0 |
| Comparative Example 1 | 50.0 | 50.0 | 0.0 | 0.0 | 0.0 |
| Comparative Example 2 | 50.0 | 49.9 | 0.1 | 0.0 | 0.0 |
| Comparative Example 3 | 50.0 | 42.0 | 8.0 | 0.0 | 0.0 |
| Comparative Example 4 | 47.3 | 50.0 | 0.0 | 2.7 | 0.0 |
| Comparative Example 5 | 42.5 | 55.0 | 0.0 | 0.0 | 2.5 |

[Table 2]

|  |  | Storage temperature | Magnetic properties | | | |
|---|---|---|---|---|---|---|
|  |  |  | $4\pi I_{max}$ | Br | Hcj | Decreasing rate of saturation magnetization |
|  |  | °C | T | T | kA/m | % |
|  | Example 1 | Before storage | 0.52 | 0.47 | 852 | - |
|  |  | 100 | 0.51 | 0.47 | 844 | 0.0 |
|  |  | 150 | 0.45 | 0.42 | 828 | -10.6 |
|  |  | 200 | 0.37 | 0.33 | 763 | -29.8 |
|  | Example 2 | Before storage | 0.64 | 0.58 | 672 | - |
|  |  | 100 | 0.59 | 0.55 | 666 | -5.2 |
|  |  | 150 | 0.50 | 0.47 | 682 | -19.0 |
|  |  | 200 | 0.43 | 0.39 | 724 | -32.8 |

(continued)

| | Storage temperature | Magnetic properties | | | |
|---|---|---|---|---|---|
| | | $4\pi I_{max}$ | Br | Hcj | Decreasing rate of saturation magnetization |
| | °C | T | T | kA/m | % |
| Example 3 | Before storage | 0.70 | 0.63 | 767 | - |
| | 100 | 0.64 | 0.60 | 802 | -4.8 |
| | 150 | 0.49 | 0.45 | 742 | -28.6 |
| | 200 | 0.29 | 0.25 | 510 | -60.3 |
| Example 4 | Before storage | 0.69 | 0.62 | 1031 | - |
| | 100 | 0.56 | 0.51 | 1039 | -17.7 |
| | 150 | 0.46 | 0.38 | 966 | -38.7 |
| | 200 | 0.28 | 0.20 | 661 | -67.7 |
| Example 5 | Before storage | 0.66 | 0.61 | 672 | - |
| | 100 | 0.61 | 0.57 | 690 | -6.6 |
| | 150 | 0.55 | 0.51 | 662 | -16.4 |
| | 200 | 0.46 | 0.41 | 529 | -32.8 |
| Example 6 | Before storage | 0.64 | 0.58 | 723 | - |
| | 100 | 0.62 | 0.57 | 727 | -1.7 |
| | 150 | 0.53 | 0.48 | 734 | -17.2 |
| | 200 | 0.45 | 0.40 | 744 | -31.0 |

[Table 3]

| | Storage temperature | Magnetic properties | | | |
|---|---|---|---|---|---|
| | | $4\pi I_{max}$ | Br | Hcj | Decreasing rate of saturation magnetization |
| | °C | T | T | kA/m | % |
| Comparative Example 1 | Before storage | 0.70 | 0.64 | 972 | - |
| | 100 | 0.49 | 0.43 | 1013 | -32.8 |
| | 150 | 0.35 | 0.34 | 1032 | -46.9 |
| | 200 | 0.12 | 0.06 | 459 | -90.6 |
| Comparative Example 2 | Before storage | 0.60 | 0.56 | 1008 | - |
| | 100 | 0.45 | 0.41 | 1011 | -26.8 |
| | 150 | 0.33 | 0.30 | 992 | -46.4 |
| | 200 | 0.06 | 0.05 | 385 | -91.1 |
| Comparative Example 3 | Before storage | 0.24 | 0.20 | 590 | - |
| Comparative Example 4 | Before storage | 0.70 | 0.64 | 669 | - |
| | 100 | 0.68 | 0.63 | 766 | -1.6 |
| | 150 | 0.65 | 0.61 | 762 | -4.7 |
| | 200 | 0.53 | 0.50 | 806 | -21.9 |
| Comparative Example 5 | Before storage | 0.36 | 0.31 | 286 | - |

[Table 4]

|  | Blending amount (g) | | | | |
|---|---|---|---|---|---|
|  | Mn | Bi | Sn | Zn | Fe |
| Example 1 | 9.56 | 34.20 | 1.24 | 0.00 | 0.00 |
| Example 2 | 9.43 | 35.16 | 0.41 | 0.00 | 0.00 |
| Example 3 | 9.40 | 35.40 | 0.20 | 0.00 | 0.00 |
| Example 4 | 9.39 | 35.49 | 0.12 | 0.00 | 0.00 |
| Example 5 | 9.30 | 35.38 | 0.20 | 0.14 | 0.00 |
| Example 6 | 9.20 | 35.37 | 0.20 | 0.28 | 0.00 |
| Comparative Example 1 | 9.37 | 35.63 | 0.00 | 0.00 | 0.00 |
| Comparative Example 2 | 9.37 | 35.59 | 0.04 | 0.00 | 0.00 |
| Comparative Example 3 | 9.91 | 31.67 | 3.43 | 0.00 | 0.00 |
| Comparative Example 4 | 8.84 | 35.56 | 0.00 | 0.75 | 0.00 |
| Comparative Example 5 | 7.52 | 37.03 | 0.00 | 0.00 | 0.45 |

As presented in Tables 2 and 3, the Mn-Bi-based magnetic powders of Examples 1 to 6 have lower decreasing rates of saturation magnetization than those of Comparative Examples 1 and 2. It is considered that this is because oxidative decline of the Mn-Bi-based magnetic powders of Examples 1 to 6 is suppressed as the hexagonal Mn-Bi-based magnetic phase contains Sn or Sn and Zn. On the other hand, it is considered that oxidation proceeds and the decreasing rate of saturation magnetization increases in Comparative Examples 1 and 2 since the hexagonal Mn-Bi-based magnetic phase does not contain Sn or the Sn content in the hexagonal Mn-Bi-based magnetic phase is low.

In Comparative Example 3, the saturation magnetization value is low since the content of nonmagnetic components is increased. The Mn-Bi-based magnetic powder of Comparative Example 3 was not subjected to the evaluation after storage since the saturation magnetization thereof before storage was too low in this manner. The Mn-Bi-based magnetic powder containing Fe of Comparative Example 5 was not also subjected to the evaluation after storage since the saturation magnetization thereof before storage was too low.

The blending ratio (mol%) calculated from the blending amount (g) of the raw material is also presented in Table 5. From the comparison between the composition of the Mn-Bi-based magnetic powder presented in Table 1 and the blending ratio (mol%) in Table 5, the content of Zn is lower in the composition of the Mn-Bi-based magnetic powder than in the blending ratio of the raw material in Examples 5 and 6 and Comparative Example 4 in which Zn is used. This indicates that Zn volatilizes in the producing process of the Mn-Bi-based magnetic powder. On the other hand, in each of Examples in which Sn is used, the composition of the Mn-Bi-based magnetic powder presented in Table 1 is substantially the same as the blending ratio (mol%) in Table 5. From this fact, a Mn-Bi-based magnetic powder containing Sn is more suitable for production on an industrial scale than a Mn-Bi-based magnetic powder containing Zn.

[Table 5]

|  | Blending ratio (mol%) | | | | |
|---|---|---|---|---|---|
|  | Mn | Bi | Sn | Zn | Fe |
| Example 1 | 50.0% | 47.0% | 3.0% | 0.0% | 0.0% |
| Example 2 | 50.0% | 49.0% | 1.0% | 0.0% | 0.0% |
| Example 3 | 50.0% | 49.5% | 0.5% | 0.0% | 0.0% |
| Example 4 | 50.0% | 49.7% | 0.3% | 0.0% | 0.0% |
| Example 5 | 49.4% | 49.4% | 0.5% | 0.6% | 0.0% |
| Example 6 | 48.9% | 49.4% | 0.5% | 1.2% | 0.0% |

(continued)

| | Blending ratio (mol%) | | | | |
| --- | --- | --- | --- | --- | --- |
| | Mn | Bi | Sn | Zn | Fe |
| Comparative Example 1 | 50.0% | 50.0% | 0.0% | 0.0% | 0.0% |
| Comparative Example 2 | 50.0% | 49.9% | 0.1% | 0.0% | 0.0% |
| Comparative Example 3 | 50.0% | 42.0% | 8.0% | 0.0% | 0.0% |
| Comparative Example 4 | 47.0% | 49.7% | 0.0% | 3.3% | 0.0% |
| Comparative Example 5 | 42.5% | 55.0% | 0.0% | 0.0% | 2.5% |

**Industrial Applicability**

According to the present disclosure, a Mn-Bi-based magnetic powder, which can maintain a high saturation magnetization even when being stored for a long period of time in a high temperature and high humidity environment, and a method for producing the same are provided. In addition, a bond magnet, which can maintain a high saturation magnetization even when being stored for a long period of time in a high temperature and high humidity environment, and a compound for bond magnet, from which such a bond magnet can be produced, are provided. Furthermore, a Mn-Bi-based metal magnet, which can maintain a high saturation magnetization even when being stored for a long period of time in a high temperature and high humidity environment, and a method for producing the same are provided.

**Reference Signs List**

10: hexagonal Mn-Bi-based magnetic phase, 50: Mn-Bi-based metal magnet.

**Claims**

1. A Mn-Bi-based magnetic powder comprising a hexagonal Mn-Bi-based magnetic phase containing Sn, wherein a content of Sn is 0.2 to 5 at% with respect to a sum of Mn, Bi and Sn.

2. The Mn-Bi-based magnetic powder according to claim 1, wherein the hexagonal Mn-Bi-based magnetic phase contains Zn, and
a total content of Sn and Zn is 5 at% or less with respect to a sum of Mn, Bi, Sn and Zn.

3. A method for producing a Mn-Bi-based magnetic powder, the method comprising a step of generating a hexagonal Mn-Bi-based magnetic phase containing Sn by heating an alloy containing Mn, Bi and Sn and obtaining a Mn-Bi-based magnetic powder having a Sn content of 0.2 to 5 at% with respect to a sum of Mn, Bi and Sn.

4. The method for producing a Mn-Bi-based magnetic powder according to claim 3, wherein the alloy is heated in an inert atmosphere.

5. The method for producing a Mn-Bi-based magnetic powder according to claim 3, wherein the alloy is an alloy powder and the Mn-Bi-based magnetic powder having a total content of Sn and Zn of 5 at% or less with respect to a sum of Mn, Bi, Sn and Zn is obtained by mixing the alloy powder with a Zn powder, heating a mixed powder containing the alloy powder and the Zn powder, and generating a hexagonal Mn-Bi-based magnetic phase containing Sn and Zn.

6. The method for producing a Mn-Bi-based magnetic powder according to claim 5, wherein the mixed powder is heated in an inert atmosphere in a vacuum or under reduced pressure.

7. The method for producing a Mn-Bi-based magnetic powder according to any one of claims 3 to 6, wherein the alloy is an alloy powder obtained by pulverizing a quenched ribbon obtained by quenching a molten material containing Mn, Bi and Sn.

8. A compound for bond magnet comprising a kneaded product of the Mn-Bi-based magnetic powder according to claim 1 or 2 with a resin binder.

9. A bond magnet comprising the Mn-Bi-based magnetic powder according to claim 1 or 2 and a resin binder.

10. A method for producing a Mn-Bi-based metal magnet, the method comprising a step of heating a molded body containing the Mn-Bi-based magnetic powder according to claim 1 or 2.

11. A Mn-Bi-based metal magnet comprising a hexagonal Mn-Bi-based magnetic phase containing Sn, wherein a content of Sn is 0.2 to 5 at% with respect to a sum of Mn, Bi and Sn.

12. The Mn-Bi-based metal magnet according to claim 11, wherein the hexagonal Mn-Bi-based magnetic phase contains Zn, and a total content of Sn and Zn is 5 at% or less with respect to a sum of Mn, Bi, Sn and Zn.

## Fig.1

(A)

(B)

Fig.2

# Fig.3

```
        ┌─────────────────────────────┐
        │  RAW MATERIALS (Mn、Bi、Sn)  │
        └─────────────────────────────┘
                      │
        ┌─────────────────────────┐
        │      MELTING OF          │~S1
        │  Mn-Bi-BASED ALLOY       │
        └─────────────────────────┘
                      │
        ┌─────────────────────────┐
        │   QUENCHING OF LIQUID    │~S2
        └─────────────────────────┘
                      │
        ┌─────────────────────────┐
        │      PULVERIZATION        │~S3
        └─────────────────────────┘
                      │
        ┌─────────────────────────┐
        │      Mn-Bi-BASED          │
        │     ALLOY POWDER          │
        └─────────────────────────┘
                      │
        ┌─────────────────────────┐
        │     HEAT TREATMENT        │~S4
        │  (HEAT TREATMENT IN       │
        │   MAGNETIC FIELD)         │
        └─────────────────────────┘
                      │
        ┌─────────────────────────┐            ┌─────────────────────────┐
        │      Mn-Bi-BASED          │            │     RESIN BINDER         │
        │   MAGNETIC POWDER         │──────┐     └─────────────────────────┘
        └─────────────────────────┘      │                  │
                      │                    └──────────────────┤
        ┌─────────────────────────┐            ┌─────────────────────────┐
        │      MOLDING IN           │~S5         │       KNEADING           │~S11
        │    MAGNETIC FIELD         │            └─────────────────────────┘
        └─────────────────────────┘                          │
                      │                          ┌─────────────────────────┐
        ┌─────────────────────────┐            │       COMPOUND           │
        │    HOT COMPRESSION        │~S6         └─────────────────────────┘
        └─────────────────────────┘                          │
                      │                          ┌─────────────────────────┐
        ┌─────────────────────────┐            │        MOLDING           │~S12
        │      Mn-Bi-BASED          │            └─────────────────────────┘
        │    METAL MAGNET           │                          │
        └─────────────────────────┘            ┌─────────────────────────┐
                                                 │      BOND MAGNET         │
                                                 └─────────────────────────┘
```

## Fig.4

```
RAW MATERIALS (Mn、Bi、Sn)
            │
   ┌────────────────────┐
   │    MELTING OF       │──S1
   │  Mn-Bi-BASED ALLOY  │
   └────────────────────┘
            │
   ┌────────────────────┐
   │ QUENCHING OF LIQUID │──S2
   └────────────────────┘
            │
      QUENCHED RIBBON
            │
   ┌────────────────────┐
   │   HEAT TREATMENT    │──S4
   │ (HEAT TREATMENT IN  │
   │   MAGNETIC FIELD)   │
   └────────────────────┘
            │
   ┌────────────────────┐
   │    PULVERIZATION    │──S7
   └────────────────────┘
            │
      Mn-Bi-BASED                    RESIN BINDER
   MAGNETIC POWDER                        │
            │──────────────────────────→  │
   ┌────────────────────┐        ┌────────────────────┐
   │     MOLDING IN      │──S5    │      KNEADING       │──S11
   │   MAGNETIC FIELD    │        └────────────────────┘
   └────────────────────┘                 │
            │                          COMPOUND
   ┌────────────────────┐                 │
   │  HOT COMPRESSION    │──S6    ┌────────────────────┐
   └────────────────────┘        │      MOLDING        │──S12
            │                     └────────────────────┘
      Mn-Bi-BASED                          │
     METAL MAGNET                      BOND MAGNET
```

# Fig.5

```
         RAW MATERIALS (Mn、Bi、Sn)

         MELTING OF
         Mn-Bi-BASED ALLOY           ─S1

         QUENCHING OF LIQUID          ─S2

         PULVERIZATION                ─S7

  RAW MATERIAL      Mn-Bi-BASED
  (Zn POWDER)       ALLOY POWDER

         MIXING                       ─S8

         HEAT TREATMENT
         (HEAT TREATMENT IN           ─S9
         MAGNETIC FIELD)

  Mn-Bi-BASED            RESIN BINDER
  MAGNETIC POWDER

S5─  MOLDING IN            KNEADING        ─S11
     MAGNETIC FIELD

S6─  HOT COMPRESSION       COMPOUND

  Mn-Bi-BASED              MOLDING         ─S12
  METAL MAGNET

                          BOND MAGNET
```

**Fig.6**

50

*Fig.7*

(A)

(B)

# INTERNATIONAL SEARCH REPORT

| | International application No. |
|---|---|
| | PCT/JP2016/089058 |

**A. CLASSIFICATION OF SUBJECT MATTER**

*H01F1/06*(2006.01)i, *B22F1/00*(2006.01)i, *B22F3/00*(2006.01)i, *B22F9/08*(2006.01)i, *C22C12/00*(2006.01)i, *H01F1/08*(2006.01)i, *H01F41/02*(2006.01)i

According to International Patent Classification (IPC) or to both national classification and IPC

**B. FIELDS SEARCHED**

Minimum documentation searched (classification system followed by classification symbols)
H01F1/06, B22F1/00, B22F3/00, B22F9/08, C22C12/00, H01F1/08, H01F41/02

Documentation searched other than minimum documentation to the extent that such documents are included in the fields searched
Jitsuyo Shinan Koho          1922-1996     Jitsuyo Shinan Toroku Koho    1996-2017
Kokai Jitsuyo Shinan Koho    1971-2017     Toroku Jitsuyo Shinan Koho    1994-2017

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 10-261514 A  (Hitachi Maxell, Ltd.),<br>29 September 1998 (29.09.1998),<br>paragraphs [0009] to [0022]<br>(Family: none) | 1,11<br>2-10,12 |
| Y<br>A | SAKUMA Akimasa, et. al, First Principles Calculation of Magnetocrystalline Anisotropy Energy of MnBi and MnBi1-xSnx, Journal of the Physical Society of Japan, Vol. 82, The Physical Society of Japan, 2013.06.10, pp. 073704 | 1,11<br>2-10,12 |
| A | JP 61-105727 A  (Fuji Photo Film Co., Ltd.),<br>23 May 1986 (23.05.1986),<br>page 5, upper right column, line 19 to lower left column, line 6<br>(Family: none) | 1-12 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>13 March 2017 (13.03.17) | Date of mailing of the international search report<br>21 March 2017 (21.03.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**EP 3 401 933 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9139304 B
- JP 2001257110 A
- JP H97163 A